# EUROPEAN PATENT APPLICATION

(11) **EP 1 492 359 A1**
(43) Date of publication of application: **29.12.2004**
(21) Application number: 03291556.3
(22) Date of filing: 24.06.2003
(51) Int. Cl.: H04Q 3/00

(54) **Processing of signalling messages according to one of a plurality of protocol stacks**

(71) Applicant: Hewlett-Packard Development Company, L.P., Houston, TX 77070 (US)
(72) Inventor: Julien, Eric, 38410 St Martin d'Uriage (FR)
(74) Representative: Lloyd, Richard Graham

(57) **Abstract**

According to a first aspect of the present invention, there is provided a method of processing a signaling message received from a service application and intended for delivery to a network element having a point code, comprising retrieving, from a data store, an indication of the network type associated with the point code and processing the signaling message through one of a plurality of protocol stack layers in accordance with the retrieved network type.

## Description

The present invention relates to the field of telecommunications networks and, more particularly, to the processing of signaling messages in accordance with one or more protocol stacks.

Many modern day telecommunications networks use the concept of common channel signaling (CCS). A CCS network uses a signaling channel which conveys information through use of labeled messages in order to control the communications network. Control of the network includes, for example, establishing, transferring and ending calls. Signaling system 7 (SS7) is an example of such a common channel signaling system which is used in many modern telecommunications networks.

The SS7 protocol comprises a number of layers which map onto the OSI 7-layer reference model. The lower three levels, corresponding to OSI layers 1 to 3 are message transfer part (MTP) layers 1 to 3. MTP level 3 provides the functions and procedures related to message routing and network management needed to interconnect the various elements, or signaling points, within the SS7 network. The signaling data conveyed by MTP Level 3 (MTP3) are mainly signaling connection control part (SCCP) and ISDN user part (ISUP) data corresponding respectively to OSI layers 4 (transport layer) and 7 (application layer).

It is largely expected that some CCS networks, such as SS7, will be gradually replaced by packet switched networks such as Internet protocol (IP) networks. This expectation is based partly on infrastructure cost savings and also due to known bandwidth restrictions related to MTP3. Accordingly, the Internet engineering task force (IETF) has recently defined an adaptation layer known as MTP3 user adaptation (M3UA) which provides the full MTP3 functionality over an Internet protocol (IP) network. Thus, a service application designed to work with M3UA is able to utilize an IP network rather than an SS7 network.

Due to the large installed base of SS7 networks, there is likely to be a reasonably long transition period, during which time SS7 and IP networks will exist in parallel.

During the transition period, network elements will exist on both SS7 and IP networks and are likely to be required to communicate with different service applications, some of which may be connected to SS7 and some to IP networks. Thus, it may be required that network equipment on an SS7 network communicates with a service application on an IP network, and vice-versa.

Many existing SS7 legacy service applications are unlikely, at least in the short term, to be modified to allow them to sit on IP networks. Indeed, there may be many applications which may never be migrated to IP networks due, for example, to economic reasons. At the same time, it is expected that most new service applications will be designed solely for IP networks.

One solution, to allow, for example, network equipment on an SS7 network to communicate with a service application on an IP network, is to use a signaling gateway. A signaling gateway performs the necessary translation from MTP3 to M3UA (and vice versa) but such gateways are generally an extra cost which network providers would rather avoid. Furthermore, signaling gateways typically add additional network routing complexity.

It is also possible to provide duplicate service applications each designed for a particular network. Thus, IP network equipment can communicate with an IP service application, and SS7 network equipment can communicate with an SS7 service application. Whilst avoiding potentially the need for a signaling gateway, this is not an ideal solution, especially for legacy applications, which may be too costly to modify. Other drawbacks may include the need to have complex database sharing and synchronization for applications sharing common information.

Accordingly, one aim of the present invention is to mitigate or overcome at least some of the above mentioned problems by providing a way to allow service applications to run on either type of network, without requiring modification.

According to a first aspect of the present invention, there is provided a method of processing a signaling message received from a service application and intended for delivery to a network element having a point code, comprising retrieving, from a data store, an indication of the network type associated with the point code and processing the signaling message through one of a plurality of protocol stack layers in accordance with the retrieved network type.

Advantageously, this enables legacy applications to run on a different network type, without requiring any changes to the application, since the embodiments of the present invention are implemented below the application layer. Furthermore, an application may run on two or more network types, without the application having to be aware of the available networks or their configuration.

Suitable the step of processing further comprises processing the signaling message in accordance with any one of message transport part layer 3 (MTP3) and MTP3 user adaptation layer (M3UA).

Preferably the method further comprises populating the data store with information relating to the network type associated with each point code. Preferably the step of populating the data store is performed automatically.

According to a second aspect of the present invention, there is provided apparatus for processing a signaling message received from a service application and intended for delivery to a network element having a point code, comprising: retrieval means for from a data store an indication of the network type associated with the point code; and a processor for processing the signaling message through one of a plurality of protocol stack layers in accordance with the retrieved network type.

Suitably the processor is adapted to process the signaling message in accordance with any one of message transport part layer 3 (MTP3) and MTP3 user adaptation layer (M3UA).

Preferably the apparatus further comprises automatic populating means for populating the data store with information relating to the network type associated with each point code.

The invention will now be described, by way of example only, with reference to the accompanying drawings, in which:
Figure 1 is a block diagram showing a network configuration according to the prior art;
Figure 2 is a diagram showing part of an SS7 protocol stack;
Figure 3 is a block diagram showing a network configuration using a signaling gateway according to the prior art;
Figure 4 is a diagram showing a network configuration according to the prior art;
Figure 5 is a diagram showing a network configuration according to the prior art;
Figure 6 is a diagram showing part of an SS7 protocol stack using the M3UA layer;
Figure 7 is a diagram showing a network configuration according to an embodiment of the present invention;
Figure 8 is a diagram showing an implementation of a protocol stack according to an embodiment of the present invention; and
Figure 9 is a flow diagram outlining example process steps according to an embodiment of the present invention.

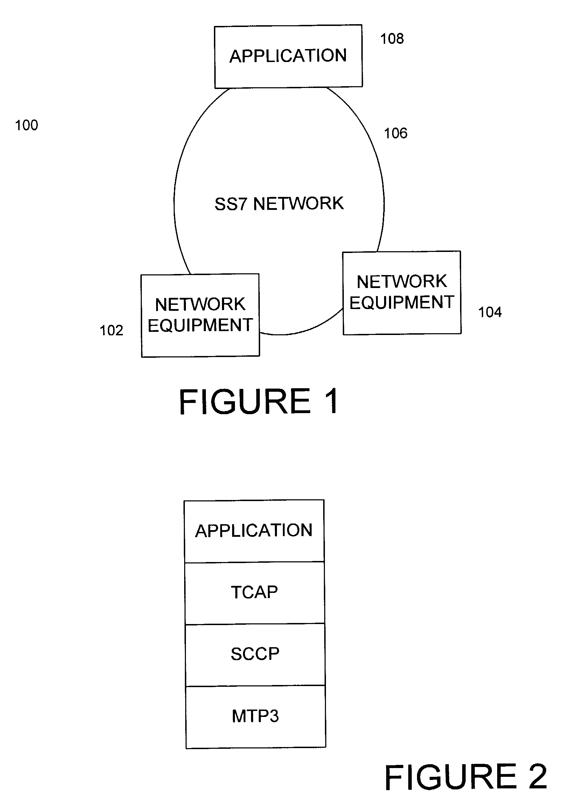

Figure 1 shows a simplified representation of a typical SS7 network 100. As will be well appreciated by those skilled in the art, an SS7 network comprises various elements of network equipment 102 and 104 which may be required to communicate with one or more service applications, such as service application 108, via an SS7 network 106. Examples of typical network equipment include service switching points (SSP), message switching centers (MSC) and other so-called intelligent peripherals. A service application may include, for example, a service control point (SCP) and a home location register (HLR).

Each element in the network is referenced by a unique point code (PC) which enables signaling messages to be sent to any element in the network.

Communication between the service application and the network equipment is performed in accordance with the SS7 protocol stack, which is shown in Figure 2. For example, when an application communicates with a piece of network equipment, such as network equipment 102, a message is sent from the application 108 containing the point code of the destination element in the network. In an SS7 network, the MTP3 layer uses this point code to ensure that the message is delivered to the intended destination, via a route which may interconnect other elements of the SS7 network. Each element in the network uses a routing table which lists a primary and alternative route through which a message may be sent based on the destination point code in the message.

The application 108 is not concerned with the intricate details of message routing, since this is taken care of by the MTP3 layer. Consequently an application or piece of network equipment only has to identify the destination of the message by its point code.

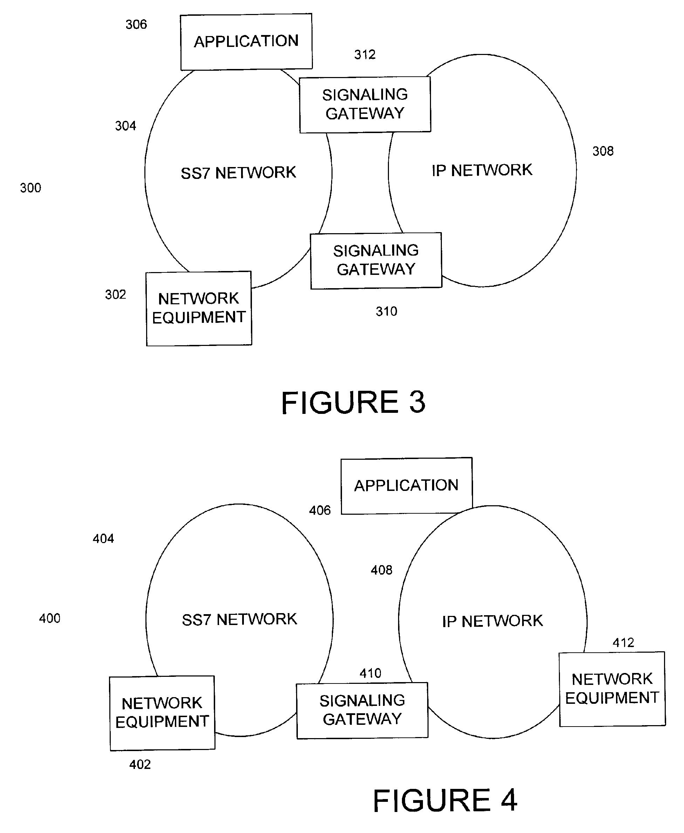

As previously mentioned, there may be bandwidth problems associated with the MTP3 layer of an SS7 network. This may arise, for example, due to increasing numbers of short messages (SMS) which are being sent on mobile telephone networks, and which are conveyed by SS7 signaling messages. In order to overcome these problems SS7 network traffic may be offloaded via an IP network 308, as illustrated in Figure 3. In order to be able to send data from network equipment 302 to service application 306 via an IP network, a signaling gateway 310 is used to translate the MTP3 data to M3UA data. In order to route data via the IP network 308, the network equipment 302 is made aware that a route passing through the signaling gateway 310 is required. The signaling gateway 310 is also made aware that traffic intended for the application 306 is to be sent via the signaling gateway 306. The signaling gateway 312 converts the M3UA data back to MTP3 data so that the data can finally reach the destination application 306.

As previously mentioned, as the transition from SS7 networks to IP networks takes place, there may be times when network equipment residing on an SS7 network needs to communicate with a service application provided uniquely on an IP network. Such a scenario is illustrated in Figure 4.

To enable the SS7 network equipment 402 to communicate with the service application 406, signaling gateway 410 is used to convert all traffic sent from the network equipment 402 to the service application 406 from MTP3 to M3UA, and vice-versa.

As mentioned above, whilst this does provide a solution to the problem, signaling gateways are expensive and it is generally desirable to avoid them wherever possible.

Network equipment, such as network equipment 412, designed directly for use, and connected to, the IP network 408 may communication with the service application 406 in the usual manner.

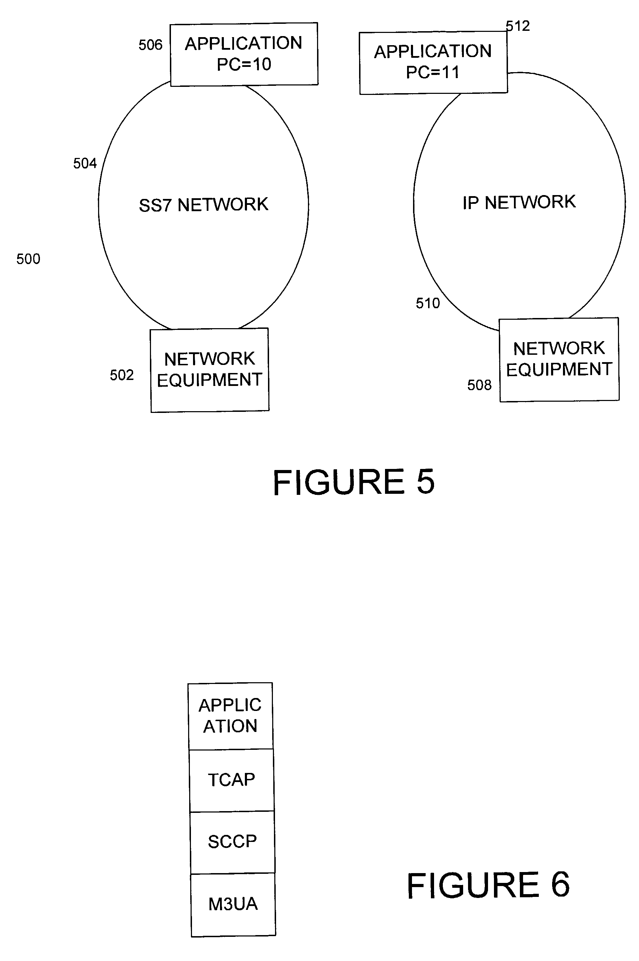

One way of avoiding the need for a signaling gateway is to provide dual versions of each service application, each one adapted for each particular network, as illustrated in Figure 5. Figure 5 is shows a network configuration in which a first version of a service application 506 is provided on an SS7 network 504, and a second version of the service application 512 is provided on an IP network 510. Although the service applications 506 and 518 may provide the same functionality, they are provided as two separate and distinct applications. Since they are different applications, each is allocated a different point code. For example, SS7 network equipment 502 addresses the service application 506 using the point code '10', and the IP network equipment 508 accesses the service application 512 using the point code '11'. In this way, the same functionality may be accessed by network equipment on either an SS7 or an IP network, without requiring the expense of a signaling gateway.

The application 506 will be required to implement the MTP3 layer of the SS7 protocol stack, whereas the application 512 will be required to implement the M3UA adaptation layer. The drawbacks of having to maintain two separate applications, each having a separate point code, which perform largely the same functionality is not attractive to application developers or to service providers.

Additionally, where the service application is, for example, a home location register (HLR), both applications 506 and 518 may need to maintain a shared and synchronized database (not shown). Such a requirement introduces additional technical difficulties such as ensuring that such a database is accurately synchronized.

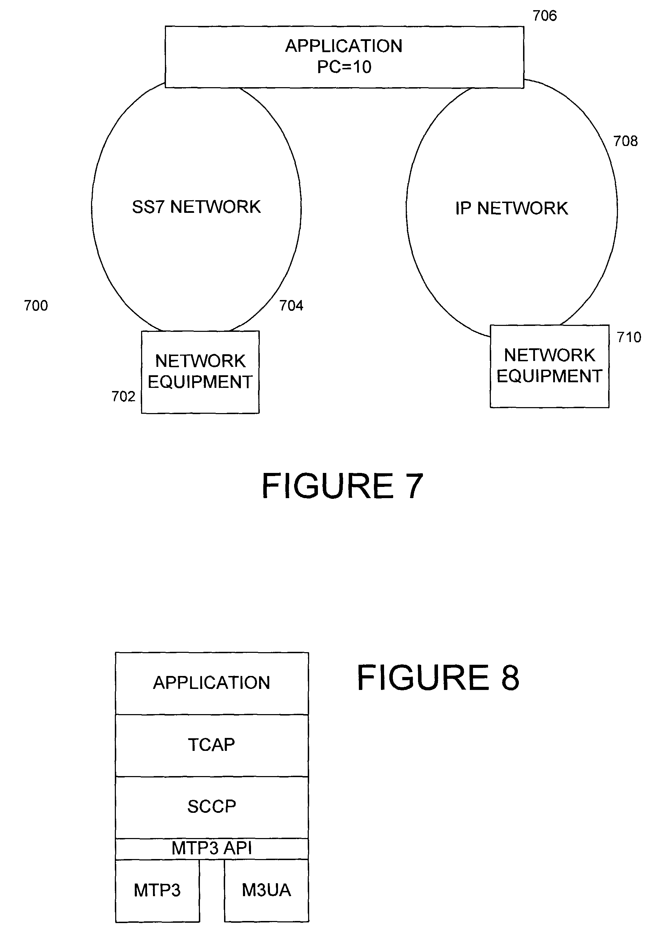

Figure 7 is a diagram showing a network configuration according to an embodiment of the present invention. A service application 705 is provided which sits on both an SS7 network 704 and on an IP network 708. Since the application is a single application a single point code may be allocated thereto. Thus, if network equipment 702, on the SS7 network 704, needs to communicate with the service application 706, a signaling message may be sent using the point code '10', via the SS7 network 704. Similarly, if network equipment 710, on the IP network 708, needs to communicate with the service application 706, a signaling message may also be sent using the point code, '10', via the IP network 708.

When the service application 706 comes to respond, for example, to a message sent by network equipment 702, the application uses the originator point code of the network equipment to identify the network equipment. However, from the application point of view, the application has no knowledge of the type of network on which the network equipment is provided.

Traditionally, this was not an issue, as service applications were only connected to a single network type. However, where two or more different network types are available, a mechanism is required to ensure that the correct network is used for routing signaling messages. Additionally, if an SS7 network is used, the signaling messages must be processed by the MTP3 layer, and if an IP network is used, the signaling messages must be processed by the M3UA layer, as illustrated by the protocol stack of Figure 8. In the present embodiment, the application uses a modified protocol stack which includes both MTP3 and M3UA layers, enabling either an SS7 or an IP network to be used. The mechanism by which the network selection is made is used is described below.

The usually provided MTP3 API level is modified such that a network selection table is provided. It should be noted that this is preferably separate from the above-mentioned routing table which is provided by the MTP3 layer itself. The network selection table, which may be either configured manually or via any known auto-detection process, indicates, for each entry in the routing table, the network through which such messages should be routed. The network selection table may, for example, be stored in an appropriate data store, such as a database, random access memory or the like.

For example, if the network selection table indicates that network equipment 710 is on an IP network, this will ensure that signaling messages sent thereto will be processed by the M3UA layer and hence be routed via an IP network. Alternatively, messages to destinations indicated as being on an SS7 network will be subsequently processed by the MTP3 layer and be routed via an SS7 network.

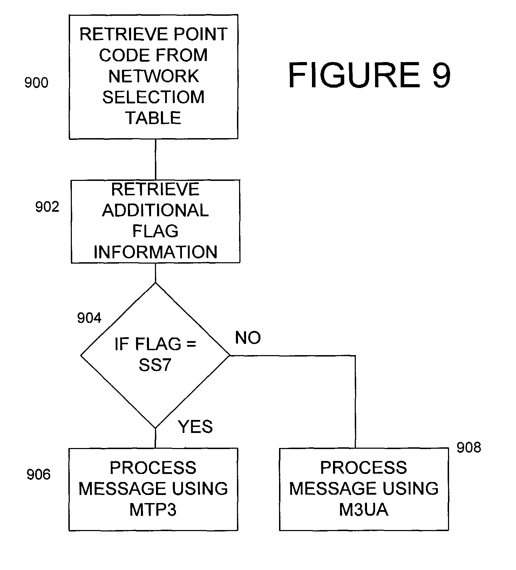

Figure 9 illustrates example process steps which may be taken by a modified API level according to an embodiment of the present invention.

In a step 900, the network selection table is interrogated to find the entry for the specified point code. The additional flag information indicating the type of network is retrieved from the table, step 902, and based on this information, the signaling message is either processed using MTP3, step 906, or using M3UA, step 908.

In this way, the application may communicate with network equipment on either an SS7 or an IP network in a way which is transparent to the application, the only modification required is at the MTP3 API level. In this way, legacy application may be provided on either an IP network, or both an SS7 and an IP network simply by modifying the MTP3 API level as described above. Not surprisingly, this may bring many advantages, such as reducing the time to market of service applications, reducing cost of such applications, enabling existing service applications to run on a different network type. Furthermore, the need for a signaling gateway may be removed.

## Claims

1. A method of processing a signaling message received from a service application and intended for delivery to a network element having a point code, comprising:
retrieving, from a data store, an indication of the network type associated with the point code;
processing the signaling message through one of a plurality of protocol stack layers in accordance with the retrieved network type.

2. A method according to claim 1, wherein the step of processing further comprises processing the signaling message in accordance with any one of message transport part layer 3 (MTP3) and MTP3 user adaptation layer (M3UA).

3. The method of claim 1 or 2, further comprising populating the data store with information relating to the network type associated with each point code.

4. The method of claim 3, wherein the step of populating the data store is performed automatically.

5. Apparatus for processing a signaling message received from a service application and intended for delivery to a network element having a point code, comprising:
retrieval means for from a data store an indication of the network type associated with the point code;
a processor for processing the signaling message through one of a plurality of protocol stack layers in accordance with the retrieved network type.

6. Apparatus according to claim 5, wherein the processor is adapted to process the signaling message in accordance with any one of message transport part layer 3 (MTP3) and MTP3 user adaptation layer (M3UA).

7. Apparatus according to claim 5 or 6, further comprising automatic populating means for populating the data store with information relating to the network type associated with each point code.
